# EUROPEAN PATENT APPLICATION

(11) **EP 2 056 128 A2**
(43) Date of publication of application: **06.05.2009**
(21) Application number: 08168157.9
(22) Date of filing: 03.11.2008
(51) Int. Cl.: G01V 3/00

(54) **Apparatus, system and method for receiving a vertical component of a signal and for determining a resistivity of a region below a geologic surface for hydrocarbon exploration**

(30) Priority: 05.11.2007 US 985501 P
(71) Applicant: SHELL INTERNATIONALE RESEARCH MAATSCHAPPIJ B.V., 2596 HR Den Haag (NL)
(72) Inventor: DARNET, Mathieu, HOUSTON, TX 77025 (US); SINGER, Johannes Maria, HOUSTON, TX 77025-1299 (US)
(74) Representative: Zeestraten, Albertus W. J.

(57) **Abstract**

A system for determining resistivity of a region below a geologic surface by transmitting a signal from a marine location above the sea floor to a receiver comprises a vertical dipole, vertical coil, or other antenna. The receiver may have a vertical dipole, including a first conductor structure and a second conductor structure, as well as a first member. The first conductor structure may be disposed below the sea floor and the second conductor structure may be disposed above the first conductor structure. The receiver may receive the signal at the sea floor. The system may be used in a method that includes releasing the remote reader from a surface vessel, activating a drive head on the remote reader, creating a hole in the sea floor, and disposing a first conductor structure within the hole.

## Description

### Field of the Invention

The present disclosure relates to an apparatus, system and method for receiving an electromagnetic signal, for determining the resistivity of a region below a geologic surface and for delineating a hydrocarbon reservoir.

### Background of the Invention

Controlled-source offshore electromagnetic surveying has typically involved transmitting electromagnetic signals from an underwater antenna of a vessel, causing electromagnetic propagation through air, seawater, and subterranean strata below the sea floor. A remote receiver having antenna spreading out across the sea floor has traditionally been used to receive the electromagnetic signals. In some situations, vertical antennas have also been used, but movement of the seawater and other factors have limited the usefulness of such antennas. A data logger has been used to store data relevant to electromagnetic signals received from the electromagnetic propagation.

### Summary of the Present Invention

A system that includes some of the teachings of the present invention may be used to determine the resistivity of a region below a geologic surface by transmitting a signal from a marine location above the sea floor. A receiver having a vertical dipole and/or a vertical coil, including a first conductor disposed below the sea floor and a second conductor disposed above the first conductor, may receive the signal at the sea floor.

A method that includes some of the teachings of the present invention may be used to dispose a remote reader at a location on a sea floor. The method may include releasing the remote reader overboard from a surface vessel, activating a drive head on the remote reader, creating a hole in the sea floor, and disposing a first conductor structure within the hole.

Examples of certain features of the invention have been summarized here rather broadly in order that the detailed description thereof that follows may be better understood and in order that the contributions they represent to the art may be appreciated. There are, of course, additional features of the invention that will be described hereinafter and which will form the subject of the claims appended hereto.

### Brief Description of the Drawings

The following figures form part of the present specification and are included to further demonstrate certain aspects of the present claimed subject matter, and should not be used to limit or define the present claimed subject matter. Consequently, a more complete understanding of the present embodiments and further features and advantages thereof may be acquired by referring to the following description taken in conjunction with the accompanying drawings, wherein:

**Figure 1** depicts an operational environment in which a receiver is operative to receive a signal at a sea floor, in accordance with an embodiment implementing some of the teachings of the present invention;

**Figure 2** depicts a remote receiver, in accordance with the embodiment of **Figure 1****;**

**Figure 3** depicts a remote receiver depositing system that includes a drive head for depositing the remote receiver below the sea floor, in accordance with the embodiment of **Figure 1** and **Figure 2****;**

**Figure 4** depicts a system for determining a resistivity of a region below a geologic surface, in accordance with an embodiment implementing some of the teachings of the present invention;

**Figure 5** depicts a flowchart of a method that may be used to determine a resistivity of a region below a geologic surface, in accordance with an embodiment implementing some of the teachings of the present invention; and

**Figure 6** depicts a flowchart of a method that may be used to dispose a remote reader at a location on a sea floor, in accordance with an embodiment implementing some of the teachings of the present invention.

It is to be noted, however, that the appended drawings illustrate only typical embodiments of the present claimed subject matter and are, therefore, not to be considered limiting of the scope of the present claimed subject matter, as the present claimed subject matter may admit to other equally effective embodiments.

### Detailed Description of Illustrative Embodiments

In accordance with an embodiment implementing some of the teachings of the present invention, a receiver is operative to receive a signal at a sea floor. In accordance with another embodiment implementing some of the teachings of the present invention, a system is operative to determine a resistivity of a region below a geologic surface.

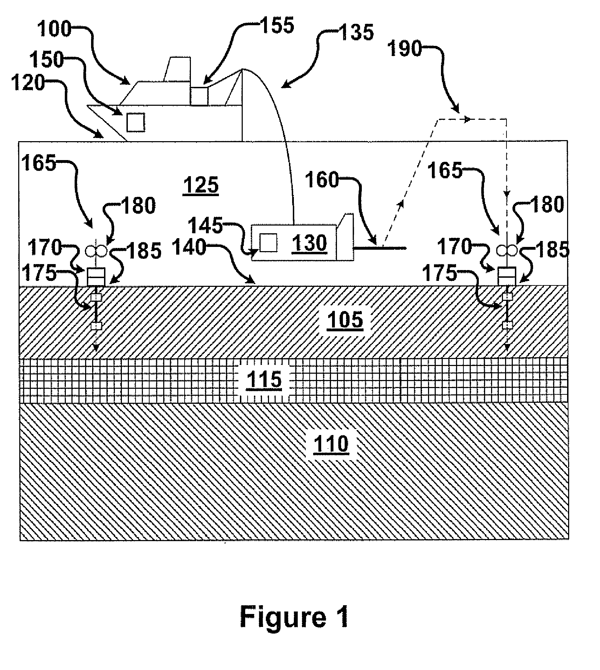

**Figure 1** depicts an operational environment in which a receiver is operative to receive a signal at a sea floor, in accordance with an embodiment implementing some of the teachings of the present invention. A surface vessel **100** may float on the surface **120** of the sea **125,** and may tow and may provide electrical power to a submersible vehicle **130** by means of an on-board power supply **150** and an umbilical cable **135.** It will be appreciated, of course, that surface vessel **100** may be replaced or supplemented with a submarine, remote operated vehicle, or other vehicle. The umbilical cable **135** may maintain submersible vehicle **130** consistently close to the sea floor **140,** may provide an electrical, optical, and/or mechanical connection between submersible vehicle **130** and surface vessel **100,** and may allow an echo-location package **145** to provide information about the height of submersible vehicle **130** above the sea floor **140** to the surface vessel **100.** The subterranean strata may include an overburden layer **105,** an underburden layer **110,** and a zone **115** containing hydrocarbon minerals in a hydrocarbon reservoir.

If desired, a signal generator **155** may generate a selected waveform for a direct (DC) or for an alternating current (AC) drive current. The drive current may be supplied to a horizontal electric dipole (HED) transmitter **160** and/or to a vertical electric dipole (VED) transmitter (not shown), both of which may be towed by submersible vehicle **130.** It will be appreciated that, although described in terms of electric dipoles, a coil or coils may also or alternatively be used.

While in this particular example a signal generator **155** may be used, any waveform generator capable of generating a suitable output signal may be employed. Furthermore, although in this particular example the waveform generator may be aboard surface vessel **100,** in other examples the waveform generator may be on the submersible vehicle **130.** In such cases, the waveform generator may be supplied with electrical power from on-board power supply **150** via umbilical cable **135.** The supply of the drive current to the transmitter(s) may cause the transmitter(s) to broadcast an HED electromagnetic (EM) signal and a VED EM signal, respectively, into the sea.

In some embodiments, an AC drive current may be replaced with a DC drive current, or may be omitted altogether. If the AC drive current is omitted, the VED EM signal may be generated by magneto-telluric fields.

At least one remote receiver **165** may be located on the sea floor **140.** Each remote receiver may comprise an instrument package **170,** an antenna **175,** a floatation device **180,** and a ballast weight **185.** The antenna **175** may comprise a vertical electric dipole (VED) detector disposed at least partially below the sea floor **140** and, optionally, two mutually orthogonal horizontal electric dipole (HED) detectors disposed on and/or just under the sea floor **140.** As mentioned previously, although described in terms of dipoles, a coil may also or alternatively be used. An orientation device, such as (for example, but not limited to) a standard marine compass or a gyroscopically-stabilized reference direction device may be included in instrument package **170** to record the verticality of the HED and the orientation of the HED detectors, if any are present.

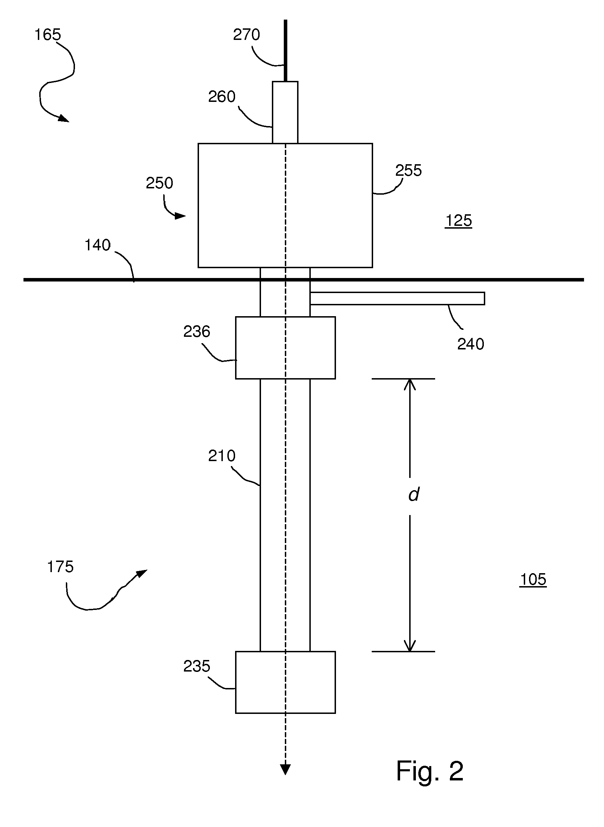

Referring now also to **Figure 2****,** a remote receiver **165** in accordance with the embodiment of **Figure 1** comprises an antenna **175,** which includes the VED detector disposed at least partially below the sea floor **140.** Antenna **175** preferably comprises a first conductor structure **235** and a second conductor structure **236,** which may collectively create a vertical dipole. As mentioned previously, the vertical dipole may be replaced or supplemented by a vertical coil. Accordingly, antenna **175** may be sensitive to vertical electric components of the EM fields induced by HED transmitter **160** in the vicinity of remote receiver **165.** Antenna **175** comprising the VED detector may produce detector signals forming VED response data. Instrument package **170** may record the VED response data for later analysis. At the end of the CSEM survey, a remotely operable release system may allow instrument package **170** to be detached from ballast weight **185** so that floatation device **180** can carry instrument package **170** to the surface **120** of the sea **125** for recovery and retrieval of the VED response data for analysis. Instrument package **170** may be retrieved by winch or similar mechanism drawing on a retrieval line that is attached to a buoy.

Remote receiver **165** may receive the VED EM signal (mentioned with respect to **Figure 1**) at the sea floor **140.** Remote receiver **165** may include a first conductor **235,** operative to be disposed below the sea floor **140,** and a second conductor **236,** operative to be disposed above the first conductor structure **235.** The second conductor structure **236** may be implemented below the sea floor **140,** or may be implemented above the sea floor **140.** Each of first conductor structure **235** and second conductor structure **236** may comprise, for example, a metal electrode or a carbon plate or other a nonpolarizable conductive material, or may comprise a chamber operative to receive seawater to connect to a conducting receiving contact.

If desired, at least one of first conductor structure **235** and second conductor structure **236** may be implemented using a naturally occurring or human-made conductive material. For example, if a naturally occurring deposit of conductive material, such as a metal, were known to exist at a particular location, the naturally occurring deposit of conductive material may be used as the conductor structure **235.** If a human-made conductive material, such as a seismic sensor, buoy anchor, or other structure were known to have been buried at a particular location, such human-made conductive material may be used as at least one of first conductor structure **235** and second conductor structure **236.**

It will also be appreciated that, although described as including first conductor structure **235** and second conductor structure **236,** remote receiver **165** may include any number of conductor structures. For example, a third conductor structure (not shown) may also be added to remote receiver **165** such that remote receiver **165** includes more than one conductor structure below the sea floor **140.** Accordingly, a first dipole (i.e., the first conductor structure **235** and the second conductor structure **236**) can establish a first resonant frequency, a second dipole (i.e., first conductor structure **235** and a third conductor structure, which is not shown) can establish a second resonant frequency, and a third dipole (i.e., second conductor structure **236** and the third conductor structure) can establish a third resonant frequency. Using wavelength resolution, a response from each dipole to the VED EM signal can provide information relevant to electric properties at multiple depths below the sea floor **140.** As mentioned previously, each dipole (e.g., the vertical dipole) may be supplemented or replaced with a coil (e.g., a vertical coil).

If desired, first conductor structure **235** and second conductor structure **236** may be combined into a single conductive structure having a low conductivity. The VED EM fields may induce an electric signal in the single conductive structure having a low conductivity.

Still referring to Figure 2, a first support member **210** may be included, onto which first conductor structure **235** and second conductor structure **236** may be mounted or coupled, although first member **210** may be omitted. The first member may be implemented, for example, as a rod, and may be nonconductive and/or may include nonconductive material or any material having a low conductivity. First member **210** may therefore help establish a vertical distance between first conductor structure **235** and second conductor structure **236.** If desired, the vertical distance between first conductor structure **235** and second conductor structure **236** may be in a range of from about 50 cm to about 100 m, although other distances may be used. If first member **210** is nonconductive or if first member **210** has a sufficiently low conductivity, then first member **210** can establish a vertical electric dipole (VED) that is sensitive to the vertical VED EM. Instead of, or in addition to, the vertical electric dipole, a vertical coil may be used.

Receiver **165** may optionally comprise a data logger **250** housed in a substantially waterproof housing **255.** Data logger **250** may be used to record a predetermined amount of data. In some implementations, data logger **250** can detach itself from the other components of remote receiver **165** in response to a transmitted command from surface vessel **100** and/or submersible vehicle **130,** in response to reaching capacity, and/or in response to an elapsed time. If desired, the data logger **250** may be implemented to detach itself from the other components of remote receiver **165** in response to a transmitted command from surface vessel **100** only if at least 75% full of data, and may further be implemented to ignore the transmitted command from surface vessel **100** if less than 75% full of data; data logger **250** can wait for a subsequent pass of surface vessel **100** if not at least 75% full.

In preferred embodiments, data logger **250** may be constructed of, or attached to, a buoyant material or object that can cause the data logger **250** to float when detached. The buoyant material may be a floatation device (e.g., floatation device **180**), or may include a deflated balloon coupled to be inflated by a canister of compressed air. Data logger **250** may also comprise a radio transponder that (before reaching the surface and/or after reaching the surface) can transmit a radio signal to surface vessel **100** facilitating retrieval of data logger **250.**

If desired, remote receiver **165** may also or alternatively comprise a data telemetry element **260** and a telemetry antenna **270** for communication between surface vessel **100** and remote receiver **165** while data logger **250** remains submerged. Accordingly, remote receiver **165** need not be retrieved from the sea floor **140** to provide data to the surface vehicle **100.** Remote receiver **165** may transmit data electromagnetically, optically, and/or acoustically to surface vessel **100.**

It will also be appreciated that disposing at least one of the conductor structures below the sea floor can help mechanically stabilize the vertical dipole antenna, tending to reduce noise. Instead of flailing, flexing and vibrating in response to wave, tide, and current perturbations of the seawater, the vertical dipole antenna may be firmly anchored in the sea floor. Moreover, in some situations, a greater fraction of electromagnetic energy received at the remote receiver may have passed through the subterranean strata when a greater portion of the dipole antenna is deep below the sea floor than when the entire remote receiver is seated on the sea floor. As mentioned above, the vertical dipole antenna may be replaced with, or supplemented with, a vertical coil.

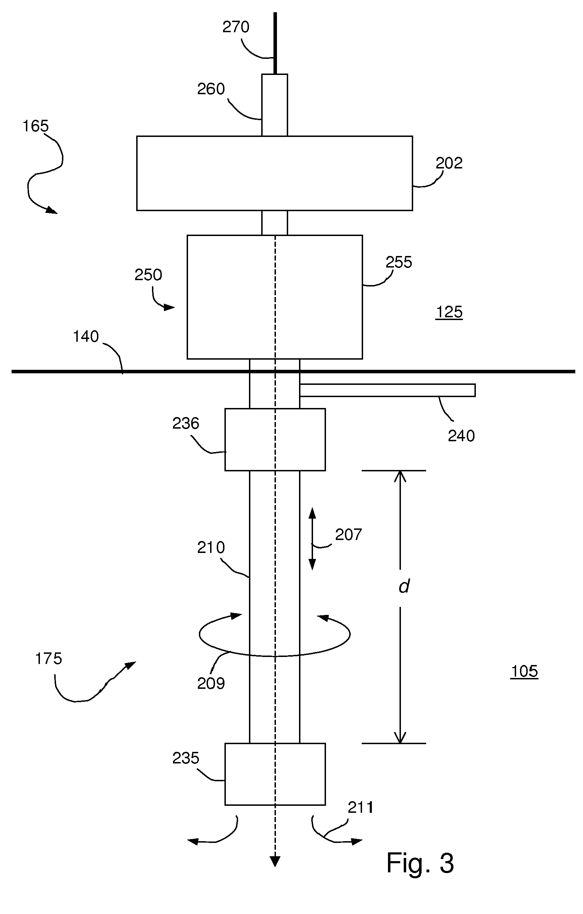

By way of example only, remote receiver **165** may be disposed below the sea floor **140** by drilling a hole in the sea floor **140** and depositing first conductor structure **235** within the hole, although in some marine environments drilling the hole may be prohibitively expensive or difficult. If desired, a remote receiver depositing system, such as described with respect to **Figure 3****,** may be used to obviate any need to drill.

**Figure 3** schematically depicts a remote receiver depositing system that includes a drive head **202** for depositing remote receiver **165** below the sea floor **140,** in accordance with the embodiments of **Figure 1** and **Figure 2****.** Head **202** may be used to apply a vertical pressure to the first member **210** onto which the first conductor structure 235 may be mounted. It will be appreciated that the remote receiver depositing system may be implemented in environments other than below a sea surface. For example, the remote receiver depositing system may be implemented on land, e.g. at a desert or seashore.

Head **202** may be, for example, a vibration head operative to apply a vibration to first member **21,** as indicated by arrow **207.** If the sea floor **140** is covered with loose gravel, sand, or other particulate material, the vibration may be sufficient to drive first member **210** vertically into sea floor **140.** If first conductor structure **235** is mounted on first member **210,** driving the first member **210** vertically into the sea floor **140** can dispose first conductor structure **235** below the sea floor **140.**

Alternatively and/or additionally, the drive head **202** may alternatively be a torsion head operative to apply a torsional (i.e., twisting) force to the vibration to first member **210.** The drive head **202** may be implemented to twist first member **210** to drive first member **210** into the sea floor **140.** The drive head **202** may operate in only one direction, or may alternate directions, as indicated by arrow **207.** For example, drive head **202** may be implemented as a propeller rotationally mounted on a propeller casing; oriented in a vertical direction, the propeller can impel the propeller casing (and therefore first member **210**) into the sea floor **140.**

In still other embodiments, the drive head **202** may alternatively and/or additionally be a pump operative to impel seawater, gravel or other material taken from the sea floor **140,** or other material that may be available into the sea floor **140.** For example, if first member **210** is implemented as a hollow rod maintained in a vertical orientation with the drive head **202** mounted at the upper end, then the drive head **202** may be used to impel seawater, for example, through first member **210** to drive material of the sea floor **140** from beneath the lower end of first member **210** such that material of the sea floor **140** is flushed from beneath remote receiver **165,** as indicated by arrows **211.**

Head **202** may be mounted permanently to first member **210,** or may be detachable. If drive head **202** is detachable, then drive head **202** may be triggered to detach from the drive head **202** in response to the first conductor structure **235** reaching a desired depth. The drive head **202** may be coupled to a buoyant floatation device (e.g. the buoyant floatation device to which data logger **250** may be attached, which may be the floatation device **180**). The buoyant floatation device may cause the drive head **202** to float to the surface in response to being detached from first member **210.** At the surface, the drive head **202** may be retrieved by a boat. The drive head **202** may then be used with respect to another remote receiver. Accordingly, one drive head **202** may suffice to implement several remote receivers.

If desired, the drive head **202** may be mounted on the first member **210.** If the first member **210** is implemented such that the first member **210** can become detached from first conductor structure **235** in response to first conductor structure **235** achieving a predetermined desired depth, then first member **210** and drive head **202** may be implemented to float to the surface together.

Alternatively, first member **210** may be removable separately from first conductor structure **235** while not being detachable from second conductor structure **236.** If desired, after disposing first conductor structure **235** at a depth approximately equal to the length of first member **210** below the sea floor **140,** first member **210** may become detached from first conductor structure **235;** first member **210** may be implemented then to slide upward, e.g. either buoyantly or as pulled by drive head **202,** and (if anchored properly) first member **210** may then maintain the second conductor structure **236** at a height equal to the length of first member **210** *above* the sea floor **140.**

Accordingly, first member **210** and drive head **202** may collectively be used merely to drive the first conductor structure **235** below the sea floor **140,** and may then collectively become detached from remote receiver **165** and may float to the surface, allowing a second member (not shown) to extend upward from first conductor structure **235.** The second member may be a telescoping rod fabricated of a nonconductive or slightly-conductive material having an upper end onto which second conductor structure **236** is coupled. Second member may, for example, be drawn by first member **210** as first member **210** floats upward.

If desired, after disposing first conductor structure **235** at a depth approximately equal to the length of first member **210** below the sea floor **140,** first member **210** may be detached from first conductor structure **235;** first member **210** may be caused then to slide upward, e.g. either buoyantly or as pulled by drive head **202,** and (if anchored properly) first member **210** may then maintain second conductor structure **236** at a height equal to the length of the first member **210** *above* the sea floor **140.** In some embodiments, head **202** may be replaced by a spring-release mechanism. A high-tension spring capable of applying enough force to drive first member **210** into the sea floor **140** may be included. The high-tension spring may be stretched or compressed with a large force, and then restrained by a restraint mechanism, before remote receiver **165** is lowered from the surface; the restraint mechanism may be include a release mechanism that can be actuated, e.g. by contact with the sea floor **140.** When remote receiver **165** reaches and comes into physical contact with the sea floor **140,** release of the high-tension spring may drive first member **210** into the sea floor **140.**

Referring once again to **Figure 2****,** an adjunct member **240** is also shown. Adjunct member **240** may extend horizontally from remote receiver **165,** and may be responsive to the HED EM signal. With a full set of antennas oriented to detect horizontal as well as vertical components of the electromagnetic signal, remote receiver **165** may be able to address individual dipoles among the remote antennas. Other combinations or polarizations may also be implemented. If remote antennas are implemented at small distances from one another, more complex polarizations, including diagonal polarizations, may be achieved.

Adjunct member **240** may be hingeably coupled to first member **210;** that is, adjunct member **240** may unfold, slide, or extend from remote receiver **165.** Adjunct member **240** may be timed to unfold, slide, or extend at a predetermined time after remote receiver **165** may be expected to come to rest on the sea floor **140,** or may be implemented to unfold, slide, or extend mechanically in response to a movement of first member **210** disposing first conductor below the sea floor. Adjunct member **240** may then extend horizontally.

If desired, adjunct member **240** may be pivoted into position by head **202** via a gear system. For example, first member **210** may include a serration or gear teeth along its length, and a gear may be positioned such that as the first member **210** slides downward along a shaft, the gear is made to rotate approximately 90°. The gear may be coupled to adjunct member **240,** which may be mechanically rotated into position. Alternatively, the gear system may be replaced with a pulley system, wherein first member **210** may draw a pulley line downward as first member **210** is driven into the sea floor **140.** The pulley line may pass over a pulley, and may draw adjunct member **240** into position.

If desired, adjunct member **240** may be pivoted into position by a spring-release mechanism, similar or identical to the spring-release mechanism described above. Adjunct member **240** may be spring-loaded when released from surface vessel **100,** and may extend into position when released. A high-tension spring, capable of applying enough force to rotate the adjunct member **240** into position, may be included. The high-tension spring may be stretched or compressed with a large force, and then restrained by a restraint mechanism, before remote receiver **165** is lowered from the surface. The restraint mechanism may include a release mechanism that can be actuated by physical contact with the sea floor **140.** When remote receiver **165** comes into physical contact with the sea floor **140,** the high-tension spring may rotate adjunct member **240** into position in response to a trigger of the release mechanism.

Adjunct member **240** may alternatively be moved into position by a weight located at or near a distal end of the adjunct member **240.** After remote receiver **165** has come to rest on the sea floor **140,** the adjunct member **240** may fall into position due to the weight. If desired, the weight may be replaced by an absorbent material, such as a sponge, that may become a weight when submerged in the seawater.

It will be understood that, in some embodiments, second conductor structure **236** need not be located below the see flow and may be located above data logger **250.**

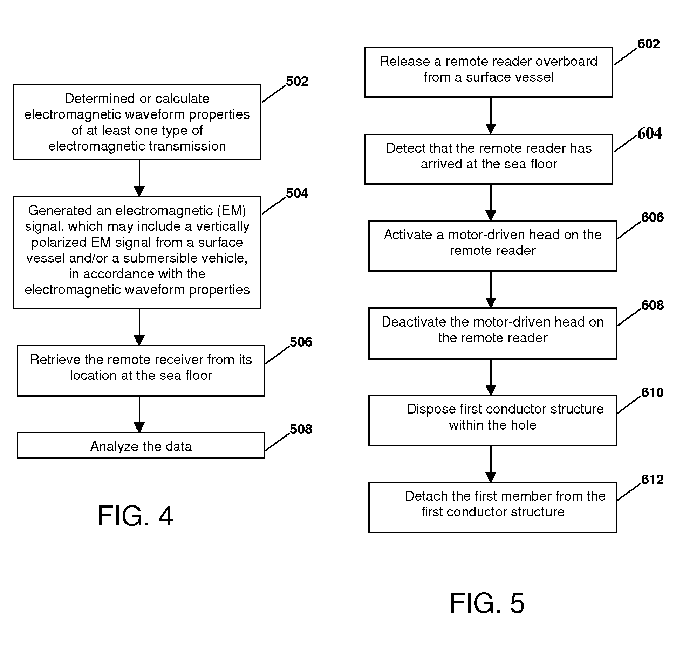

**Figure 4** depicts a flowchart of a method that may be used to determine a resistivity of a region below a geologic surface, in accordance with an embodiment implementing some of the teachings of the present invention. Electromagnetic waveform properties of at least one type of electromagnetic transmission may be determined or calculated **502.** The electromagnetic transmission may be of a type that can be detected and measured by a remote receiver when transmitted from a surface vessel or submersible vehicle, and may include one or more component of any orientation.

For example, the electromagnetic transmission may include a vertically polarized electromagnetic polarization component. Some electromagnetic waveform properties (such as frequencies or wavelengths, amplitudes, and/or modulations) may be based upon environmental factors; geometric factors such as sea depth and/or geographical location of the surface vessel, the submersible vehicle, and/or the remote receiver; underwater terrain features; acoustic and electromagnetic sensitivities of (and possible interference caused by) nearby activities and equipment, including human activity such as drilling or surveying equipment; and electromagnetic properties of the air, the water (including thermal layers within the water), and the subterranean strata (which may include an overburden layer, an underburden layer, and/or a zone containing hydrocarbon minerals in a hydrocarbon reservoir, among other possible layers).

An electromagnetic (EM) signal, which may include a vertical component, may then be generated **504** from a surface vessel and/or a submersible vehicle, in accordance with the electromagnetic waveform properties. If desired, a vertical EM signal or component may be generated from a submersible vehicle, while a horizontal EM signal or component may be generated from a surface vehicle, or both a vertical and a horizontal EM signal or component may be generated from a surface vehicle. Any other combination of components or polarizations may also or alternatively be used.

If the EM signal is tuned appropriately for a remote receiver that is located with range of the transmission, the EM signal may then be detected at the remote receiver, which can store data accordingly. If more than one remote receiver is located with range of the transmission, the EM signal may then be detected and data stored at each of the remote receivers. Each remote receiver may be tuned or oriented to a different EM signal, which may be generated simultaneously or in sequence.

For example, if a first remote receiver has a vertically oriented dipole antenna that includes several conductor structures at a first fixed distance from one another, and a second remote receiver has a vertically oriented dipole antenna that includes several conductor structures at a second fixed distance from one another (where the first fixed distance is significantly different from the second fixed distance), then each remote receiver may be responsive to a different wavelength or penetration depth of the EM signal. All such wavelengths may be transmitted simultaneously, from a single source or from different surface vessels and/or submersible vehicles located in different locations and directions if desired, and yet each remote receiver can distinguish and respond to only the wavelengths and polarizations for which it is designed.

The remote receiver may be retrieved **506** from its location at the sea floor, and the data may then be analyzed **508.** Alternatively, time and frequency components of the stored data, for example, may be examined, and electromagnetic properties of each channel through which the EM signal has propagated to the remote receiver may be separately recovered. From the electromagnetic properties signal, a resistivity of a region below a geologic surface may be determined by means of inversion **510.** From the resistivity of the region of the sea floor, a determination may then be made as to the likelihood or chance that a hydrocarbon reserve may be found in the region of the sea floor. If desired, the remote receiver may transmit the data from its location at or near the sea floor, obviating any need to retrieve the receiver; in other words, remote reading may be used, such that the receiver is read remotely without having to be retrieved.

It may be appreciated that in some situations, different signal components may have different propagation properties as well as different sensitivities to subsurface properties. Determining the signal components may be useful in determining the resistivity of a region below a geological surface for hydrocarbon exploration.

It should be mentioned that there might be many reasons for wanting to determine the subterranean resistivity (e.g., the resistivity of a region below a geologic surface). In some situations, where the region below the geologic surface includes hydrocarbons having a high resistivity, determining the subterranean resistivity may directly help in hydrocarbon exploration. In other situations, where the region below the geologic surface includes salts and/or basalts having a low resistivity, determining the subterranean resistivity may help in locating the salts and/or basalts, which are often obstacles to drilling operations. Attempting to drill through salts and/or basalts can be difficult, and can damage drilling equipment. Therefore, determining the subterranean resistivity can indirectly help in hydrocarbon exploration.

**Figure 5** depicts a flowchart of a method that may be used to dispose a remote reader at a location on a sea floor, in accordance with an embodiment implementing some of the teachings of the present invention. The remote reader may be released **602** overboard from a surface vessel. The remote reader may have a weight, such as concrete base, that can cause the remote reader to sink to the sea floor in response to being released overboard. The remote reader may also have a floater or other buoyant component, or a component have a high hydrodynamic drag, which in combination with the weight can cause the remote reader to arrive at the sea floor in a substantially vertical orientation. If desired, the remote reader may be coupled to one end of a retrieval line, the other end of which may be coupled to a buoy; the remote reader may then be lowered to the sea floor by a winch mechanism. The buoy is, of course, optional, and the winch mechanism may simply drop the retrieval line to the sea floor when the remote reader arrives at a desired location on the sea floor.

If desired, the remote reader may be released from a submersible vehicle that has been pre-loaded with one or more remote readers. Because the submersible vehicle can move at a depth that is very close to the sea floor, the submersible vehicle may be able to dispose the remote reader with high accuracy.

The remote reader may detect **604** that the remote reader has arrived at the sea floor. The remote reader may have a pressure sensor, button, or other mechanism that can be activated by the sea floor coming into contact with the remote reader, or with the weight. If desired, the remote reader may have a motion detector, barometer, or other mechanism that can detect that the remote reader is no longer moving through the water, or that the remote reader has reached a depth approximately equal to the depth of the sea floor. The remote reader may also or alternatively be equipped with a timer that can transition the remote reader from a latency mode into an operational mode. If desired, and the remote reader is attached to a retrieval line, the remote reader may detach itself from the retrieval line so that the retrieval line may be used to place another remote reader.

Alternatively, the remote reader may be notified by a transmitted control signal from the surface vessel, or from a submersible vehicle, that the remote reader should transition from a latency mode into the operational mode. The transmitted control signal can be specific to one remote reader, or to a group of remote readers, or may be unicast to all remote readers within a predetermined range.

A drive head on the remote reader may be activated **606.** The remote reader may have a pump or other drive head operative to impel seawater, gravel or other material taken from or near the sea floor, or other material that may be available, into the sea floor. If the remote reader also has a first member that has been implemented as a hollow rod maintained in a vertical orientation, with the drive head mounted at the upper end, then the drive head may be used to impel sea water, for example, through the first member to drive material of the sea floor from beneath the lower end of the first member such that material of the sea floor is flushed from beneath the remote receiver.

If desired, the drive head on the remote reader may have a vibration motor, a torsion motor (unidirectional or bidirectional), linear motor, or other mechanism operative to create a hole in the sea floor, as well as a first member that can be a rod. If the sea floor is sufficiently penetrable, the drive head can drive the first member linearly (that is, vertically) into the sea floor. If the drive head is a vibration motor, and if the sea floor has sandy or gravelly material, then drive head may be able to vibrate the first member into the sea floor. If the drive head is a torsion motor, then the drive head may be able to twist the first member into the sea floor, either by twisting the first member in one direction only or by agitating the first member from one direction to the other. If the drive head is a linear motor, then the drive head may be able to hammer the first member into the sea floor by repeatedly striking the upper end of the first member. Other types of motors and mechanisms for driving the first member into the sea floor may also or alternatively be used. The drive head on the remote reader may then be deactivated **608.** If desired, and if a separate power source is included, the drive head may be deactivated in response to local power exhaustion. Accordingly, the drive head may produce a hole in the sea floor.

A first conductor structure may be disposed **610** within the hole. The first conductor structure may be integrally formed with the first member, either by coupling a conductive material to the first member or by recessing the first member such that seawater can enter a portion of the first member, or the first conductor structure may be permanently or detachably mounted on the first member. The first conductor structure may, for example, be an end cap that can be unscrewed from the first member by a rotation applied by the drive head. If desired, the conductive material may include a metal electrode fabricated of a nonpolarizable conductive material such as carbon plate, or the first conductor structure may comprise a chamber operative to receive seawater.

If the first member is detachable from the first conductor structure, the first member may be, but in some implementations need not be, detached **612** from the first conductor structure. If the first member comprises or is attached to a buoyant component, then the first member may float upward, either to the surface of the sea, or (if anchored properly) to a position above the first conductor structure. If desired, the first member may comprise a telescoping shaft that can extend upward above the sea floor.

The drive head may be mounted permanently to the first member, or may be detachable. If the drive head is detachable, then the drive head may be triggered to detach from the drive head in response to the first conductor structure reaching a desired depth. The drive head may be coupled to a buoyant floatation device that can cause the drive head to float to the surface in response to being detached from the first member, where the drive head may be retrieved by a boat. The drive head may then be used with respect to another remote receiver.

The first member can be fabricated of a nonconductive material onto which one or more additional conductive structures may be coupled. For example, a second conductor structure may be coupled to the first member at a distance from the first conductor structure. The first conductor structure and the second conductor structure may comprise a vertical electric dipole, which may be used as a vertical electric dipole antenna. As mentioned previously, a vertical coil may be used instead of, or in addition to, the vertical electric dipole antenna. A telemetry unit of the remote reader may begin transmitting data to the surface vessel immediately, or may begin transmitting data in response to a command subsequently received from a surface vessel, or may begin transmitting data in response to an expiration of a time delay, or may store data (for subsequent retrieval) without transmitting.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the invention in its aspects. Although the invention has been described with reference to particular means, materials and embodiments, the invention is not intended to be limited to the particulars disclosed; rather, the invention extends to all functionally equivalent structures, methods, and uses such as are within the scope of the appended claims.

## Claims

1. A device operative for receiving a signal at a sea floor, the receiver **characterized in that** it comprises:
a first conductor disposed below the sea floor;
a second conductor disposed above the first conductor structure;
wherein the first conductor structure and the second conductor structure are operative to create a vertical dipole responsive to a vertical electric field.

2. The device of claim 1, further comprising a drive head operative to drive at least the first conductor into the sea floor.

3. The receiver of claim 1, further comprising a pump operative to flush material of the sea floor from beneath the receiver.

4. The receiver of claim 3, further including a rod to which the first conductor and the second conductor are coupled, wherein the pump is operative to impel sea water through the rod into the sea floor such that material of the sea floor is flushed from beneath the receiver.

5. The device of Claim 1 wherein at least one of the first conductor and the second conductor comprises a chamber for receiving seawater.

6. The device of Claim 1 wherein at least one of the first conductor and the second conductor comprises an electrode.

7. The device of Claim 6 wherein the electrode is nonpolarizable.

8. The device of Claim 6 wherein the electrode comprises a carbon plate.

9. The device of Claim 1, further including a non-conductive rod to which the first conductor and the second conductor are coupled.

10. The device of Claim 9 wherein the rod is removable separately from at least one of the first conductor and the second conductor.

11. The receiver of claim 1, further including a rod to which the first conductor and the second conductor are coupled and a second member pivotably coupled to the rod, wherein the second member is operative to extend horizontally.

12. A system operative to determine electric resistivity of a region below a geologic surface, the system comprising:
a transmitter operative to transmit a signal from a marine location above the sea floor; and
a receiver operative for receiving the signal at the sea floor, the receiver comprising:
a first conductor structure, operative to be disposed below the sea floor;
a first member, operative to dispose the first conductor structure below the sea floor; and
a second conductor structure, operative to be disposed above the first conductor structure, such that the first conductor structure and the second conductor structure are operative to create a vertical dipole.

13. The device of claim 12, further comprising a drive head operative to drive at least the first conductor into the sea floor.

14. The receiver of claim 12, further comprising a pump operative to flush material of the sea floor from beneath the receiver.

15. The receiver of claim 14, further including a rod to which the first conductor and the second conductor are coupled, wherein the pump is operative to impel sea water through the rod into the sea floor such that material of the sea floor is flushed from beneath the receiver.
